# EUROPÄISCHE PATENTSCHRIFT

(11) **EP 1 554 146 B1**
(45) Veröffentlichungstag und Bekanntmachung des Hinweises auf die Patenterteilung: **12.10.2011**
(21) Anmeldenummer: 03773517.2
(22) Anmeldetag: 13.10.2003
(51) Int. Cl.: B60J 7/14

(54) **CABRIOLET-FAHRZEUG**
CABRIOLET VEHICLE
VEHICULE AUTOMOBILE DECAPOTABLE

(30) Priorität: 17.10.2002 DE 10248348; 17.10.2002 DE 10248349; 17.10.2002 DE 10248350; 28.08.2003 DE 20313456 U
(43) Veröffentlichungstag der Anmeldung: 20.07.2005
(73) Patentinhaber: Wilhelm Karmann GmbH, 49084 Osnabrück (DE)
(72) Erfinder: RUSSKE, Klaus, 49143 Bissendorf (DE)
(74) Vertreter: Kronthaler, Schmidt & Coll.
(86) Internationale Anmeldenummer: PCT/DE2003/003399
(87) Internationale Veröffentlichungsnummer: WO 2004/037587

(56) Entgegenhaltungen:
- EP-A- 1 247 676
- FR-A- 2 805 219

## Beschreibung

Die Erfindung betrifft ein Cabriolet-Fahrzeug nach dem Oberbegriff des Anspruchs 1 sowie ein bewegliches Fahrzeugdach nach dem Oberbegriff des Anspruchs 13.

Aus der DE 44 45 580 C1 ist ein Cabriolet-Fahrzeug bekannt, das gegeneinander einfaltbare feste Dachteile aufweist. Ein hinteres Dachteil umfaßt zwei seitlich aufragende Hauptsäulen und eine dazwischen liegendes Rückfenster. Dem Verlauf der Hauptsäulen folgend, sind pro Fahrzeugseite zwei Gestängeteile angeordnet, ein sog. Lenker und ein Hauptlenker, die sich zwischen einem unterhalb einer Fensterbrüstungslinie gelegenen Hauptlager und einem vorderen Dachteil, das in Schließstellung im wesentlichen horizontal über dem Insassenraum liegt, erstrecken. Lenker und Hauptlenker liegen in Seitenansicht im wesentlichen parallel zueinander und bilden Teile eines Schwenkparallelogramms aus, mit dem die Öffnungs- und Schließbewegung der Dachteile bewirkt werden kann. Der Hauptlenker kann auch durch die Hauptsäule des hinteren Dachteils selbst gebildet sein. In Ablagestellung liegen die Lenker und die Hauptsäulen im wesentlichen horizontal, so daß die Heckscheibe tief im Kofferraum liegt und mit ihrer bei geschlossenem Dach die Außenseite bildenden Seite nach unten weist. Durch die Wölbung der Heckscheibe ist der Kofferraum zusätzlich eingeschränkt.

Die EP 1 247 676 A1 zeigt ein Cabriolet-Fahrzeug mit einem zumindest drei starre Dachteile umfassenden beweglichen Dach, wobei ein hinterer Dachteil einen im geschlossenen Dachzustand zwischen seitlichen Hauptsäulen liegenden, eine Heckscheibe umfassenden Mittelbereich aufweist, wobei der Mittelbereich mit den Hauptsäulen schwenkbeweglich verbunden ist und bei der Dachöffnung gegenüber diesen bewegt werden kann. Dabei gerät der Mittelteil jedoch in eine bereichsweise weit nach unten vorstehende Lage, so daß die Nutzung des Kofferraums erschwert ist.

Der Erfindung liegt das Problem zugrunde, bei einem Cabriolet-Fahrzeug mit mehreren starren Dachteilen eine hinsichtlich des Kofferraums bei abgelegtem Dach optimierte und dennoch einfache Faltungskinematik zu schaffen.

Die Erfindung löst dieses Problem durch ein Cabriolet-Fahrzeug mit den Merkmalen des Anspruchs 1 sowie durch ein bewegliches Dach mit den Merkmalen des Anspruchs 13. Hinsichtlich weiterer vorteilhafter Ausgestaltungen der Erfindung wird auf die abhängigen Ansprüche 2 bis 12 verwiesen.

Erfindungsgemäß ist erreicht, daß der die Heckscheibe umfassende Mittelbereich in einer von den seitlichen Hauptsäulen getrennten Lage abgelegt werden kann, wodurch das Packmaß des abgelegten Daches vermindert werden kann. Auch ohne eine aufwendige Drehmechanik kann die Heckscheibe gegenüber den seitlichen Hauptsäulen erhöht im Kofferraum oder Verdeckkasten abgelegt werden, so daß unterhalb dieser weiterer Stauraum entsteht.

Gleichzeitig ist durch die zusätzliche Abstützung auch in einer sog. Totpunktlage, in der die Drehpunkte der Gelenke auf einer Linie übereinanderliegen, ein Herunterkippen oder Überschlagen des oder eines vorderen Dachteils nach hinten zwangsläufig verhindert.

Die zusätzliche Abstützung ist dabei zwingend nur in dieser Phase der Bewegung wirksam und kann daher mit großen Toleranzen versehen sein.

Vorteilhaft kann sie auch in weiteren Bewegungsphasen des Dachöffnens oder -schließens wirksam sein, wobei auch die jeweils an der Bewegung stützend beteiligten Bauteile bei hinreichender Elastizität der Teile und/oder ihrer Anbindungen während der Bewegung mehrfach wechseln können. Dies vereinfacht die Anforderungen bei der Herstellung der erfindungsgemäßen Fahrzeuge.

Das Freiluftgefühl auch bei geschlossenem Dach kann verbessert sein, wenn dem oberen Dachteil ein als Schiebedach wirkender Plattenkörper zugeordnet ist, der zu seiner Öffnung über den hinteren Dachteil verlagerbar ist. Insbesondere kann der Plattenkörper ebenfalls transparent sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein erfindungsgemäßes Cabriolet-Fahrzeug in schematischer, unten und vorne abgebrochener Seitenansicht bei vollständig geschlossenem Dach,
- Fig. 2: eine ähnliche Ansicht wie Fig. 1 bei beginnender Dachöffnung, in etwa entsprechend einer Totpunktlage mit in einer Linie liegenden Gelenken,
- Fig. 3: eine ähnliche Ansicht wie Fig. 2 bei weiter fortschreitender Dachöffnung,
- Fig. 4: eine ähnliche Ansicht wie Fig. 3 in vollständiger Öffnungsstellung des Daches,
- Fig. 5 bis Fig. 9: den Bewegungsablauf der Dachöffnung in schematisierter und vereinfachter Dar- stellung des wirksamen Mehrgelenks mit eingezeichneten Wirklinien zwischen den Gelenken, darin

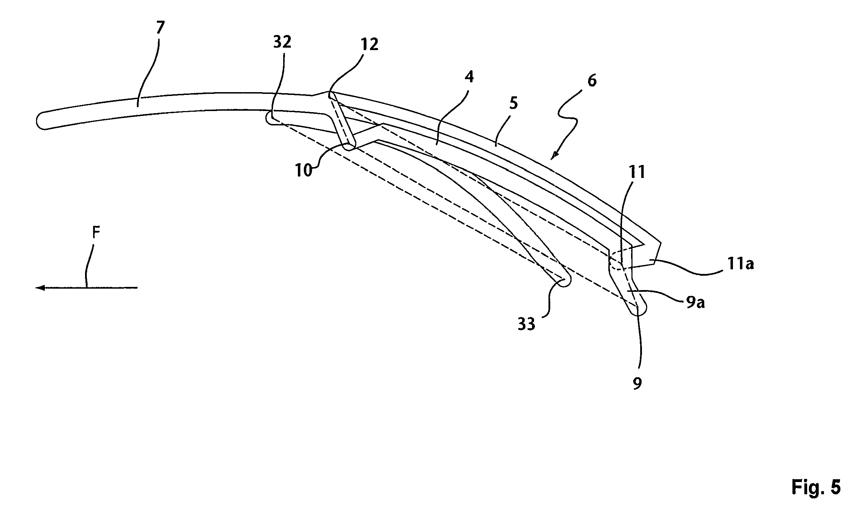

- Fig. 5: das Dach in geschlossener Stellung,

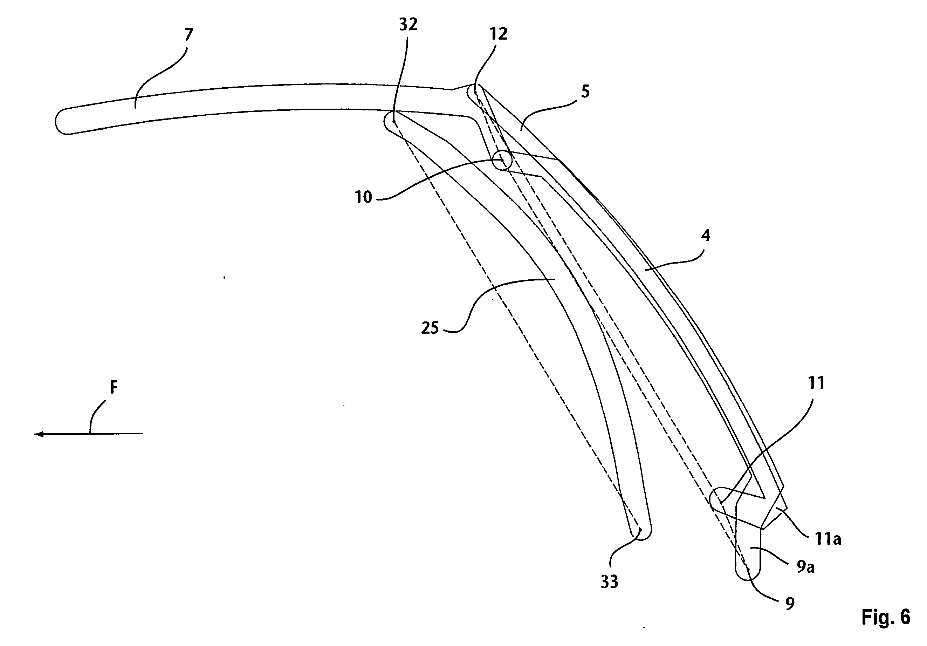

- Fig. 6: das Dach bei seiner beginnenden Öffnung,

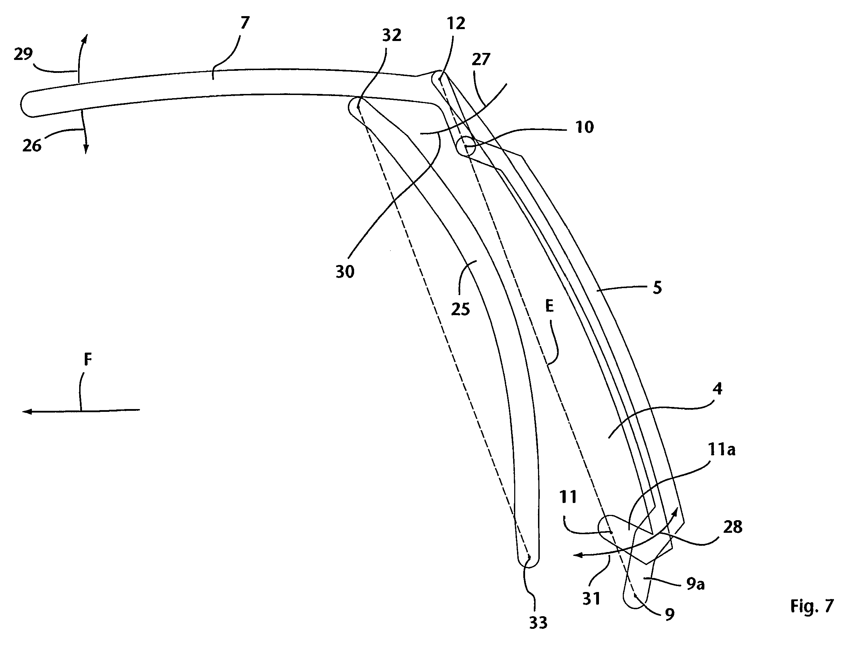

- Fig. 7: das Dach bei weiter fortschreitender Öffnung in einer Totpunktlage mit in einer Linie liegenden Gelenken,

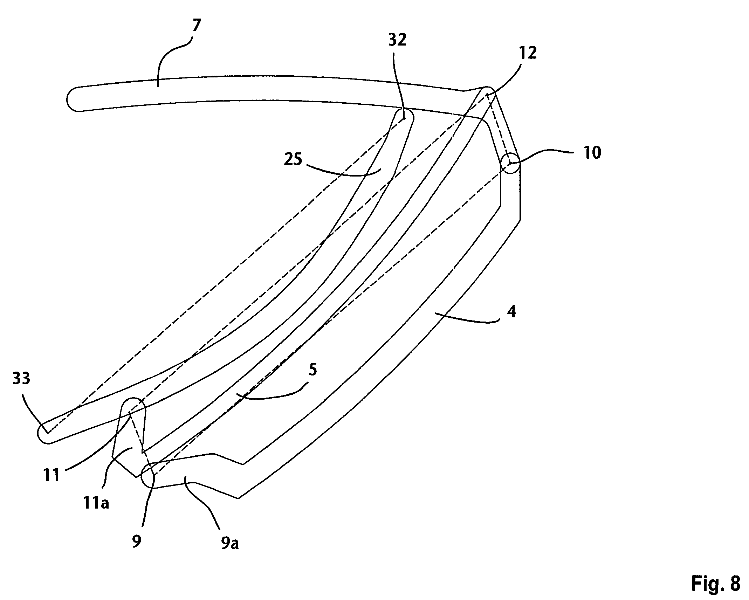

- Fig. 8: eine ähnliche Ansicht wie Fig. 7 bei weiter fortschreitender Dachöffnung,

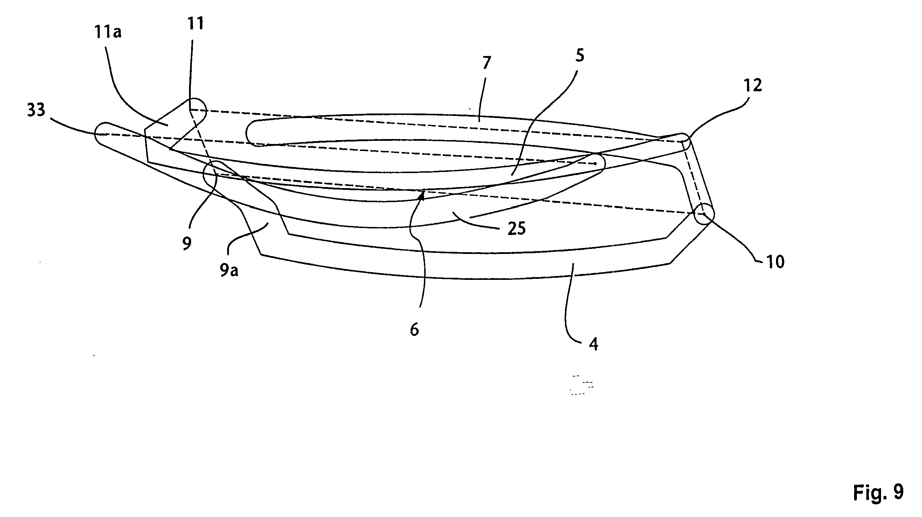

- Fig. 9: die vollständige Öffnungsstellung des Daches.

Das dargestellte erfindungsgemäße Cabriolet-Fahrzeug 1 kann sowohl ein zweisitzer als auch ein Cabriolet-Fahrzeug mit einem größeren Innenraum und etwa zwei Sitzreihen hintereinander sein.

Das Fahrzeug 1 umfaßt ein bewegliches Dach, das insgesamt mit 2 bezeichnet ist und einen bezüglich der Fahrtrichtung F rückwärtigen Dachteil 3 mit zwei seitlichen Hauptsäulen 4 und einem dazwischen befindlichen Mittelbereich 5 aufweist. Dieser umfaßt eine oder ist im wesentlichen gebildet aus einer flexiblen oder insbesondere starren Heckscheibe 6, die beispielsweise aus Kunststoff oder vorteilhaft Glas bestehen kann. Sowohl die Hauptsäulen 4 als auch der Mittelbereich 5 sind starr und können daher Drehmomente übertragen. Die Hauptsäulen 4 sowie ein eventueller Rahmen des Mittelteils 5 können beispielsweise aus Stahl, einem Leichtmetall, einem metallischen Schaumwerkstoff oder Kunststoff gebildet sein. Es ist auch möglich, daß auch die Hauptsäulen 4 transparent ausgebildet sind. Des weiteren können die Hauptsäulen 4 von Rahmenteilen unterstützt sein.

Weiter umfaßt das Dach 2 zumindest ein gegenüber dem Dachteil 3 im geschlossenen Zustand in Fahrtrichtung F vorgeordnetes oberes Dachteil 7. Dieses ist im Ausführungsbeispiel mit einem zweisitzigen Fahrzeug 1 zusammenhängend und ohne durchgehende gebildet; es liegt im geschlossenen Zustand im wesentlichen horizontal und stützt sich unmittelbar oder mittelbar am Windschutzscheibenrahmen 8 ab. Das Dachteil 7 kann wie die Hauptsäulen 4 aus unterschiedlichen Materialien gebildet sein.

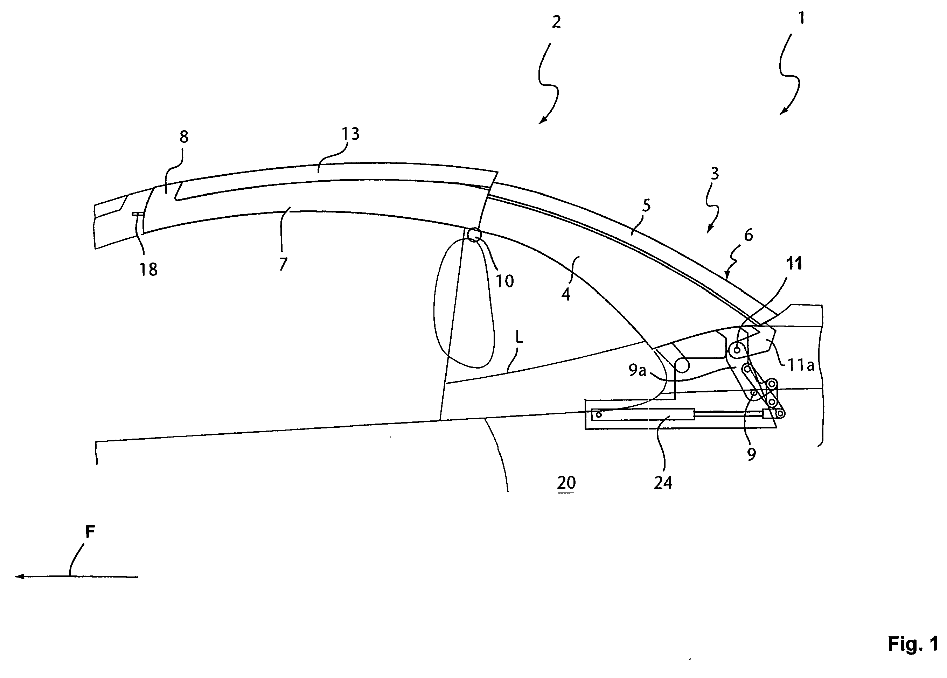

Die Hauptsäulen 4 erstrecken sich bei geschlossenem Dach 2 (Fig. 1) zumindest zwischen einer Fensterbrüstungslinie L - sie können auch weiter unten in der Karosserie 20 beginnen - und dem oberen und in Fahrtrichtung F vorgeordneten Dachteil 7, das oberhalb eines Insassenraums gelegen ist. Die Hauptsäulen 4 sind in ihrem unteren Bereich über Ausleger 9a gegenüber der Karosserie 20 an zumindest während des Verschwenkens karosseriefesten Schwenkgelenken 9 gehalten. Deren Gelenkachsen liegen horizontal und quer zum Fahrzeug 1. Im oberen Bereich sind die Hauptsäulen 4 an Schwenkgelenken 10, die ebenfalls horizontale und quer zum Fahrzeug 1 erstreckte Gelenkachsen aufweisen, mit dem Dachteil 7 verbunden. Um die Achse der Schwenkgelenke 10 falten die Dachteile 3 und 7 bei der Dachöffnung gegeneinander ein.

Der Mittelbereich 5 ist in seinem unteren Bereich über Ausleger 11a gegenüber der Karosserie 20 an einem oder mehreren zumindest während des Verschwenkens karosseriefesten Schwenkgelenk(en) 11 gehalten. Deren Achsen liegen horizontal und quer zum Fahrzeug 1. Im oberen Bereich ist der Mittelteil 5 an zumindest einem Schwenkgelenk 12, das ebenfalls eine horizontale und quer zum Fahrzeug 1 erstreckte Lagerachse aufweist, mit dem oberen Dachteil 7 verbunden. Im Ausführungsbeispiel sind jeweils zwei Schwenkgelenke 11, 12, die den beiden Fahrzeugseiten zugeordnet sind, vorgesehen.

Die unteren Schwenkgelenke 11 des Mittelteils 5 liegen jeweils in einer Ebene oberhalb der Ebene der Schwenkgelenke 9 der seitlichen Hauptsäulen 4; die oberen Schwenkgelenke 12 des Mittelteils 5 liegen jeweils in einer Ebene oberhalb der Ebene der Schwenkgelenke 10 der Hauptsäulen 4. Wie unten noch näher erläutert ist, können die Schwenklager 9 und 11 optional zwar während des Verschwenkens karosseriefest, jedoch zwischen einer geschlossenen Dachstellung und einer zum Schwenken geeigneten hinteren Extremalstellung horizontal oder nahezu horizontal verschieblich sein.

Die Gelenke 9, 10, 11, 12 bilden in Seitenansicht eine Mehrgelenkanordnung aus - im gezeichneten Ausführungsbeispiel pro Fahrzeugseite jeweils ein Viergelenk. Sofern die Verbindungslinien zwischen den Gelenken 9, 10 einerseits und 11, 12 andererseits jeweils gleichlang sind, ergibt sich daraus ein Schwenkparallelogramm - in den Figuren 5 bis 9 gestrichelt eingezeichnet - mit den Eckpunkten 9, 10, 11, 12.

Zusätzlich zu dieser Mehrgelenkanordnung 9, 10, 11, 12 ist für das vordere Dachteil 7 eine gesonderte Abstützung 25 vorgesehen, die bei geschlossenem Dach optisch verdeckt in einer Schlitzführung des Daches 2 aufgenommen ist und das Dachteil 7 gegenüber der Karosserie 20 abstützen kann. Es kann hinreichend sein, nur an einer Fahrzeugseite eine solche Abstützung 25 vorzusehen. Auch aus Symmetriegründen kann jeder Fahrzeugseite eine Abstützung 25 zugeordnet werden. Diese Abstützung 25 ist zumindest in der sog. Totpunktstellung nach Fig. 7 wirksam, in der alle Gelenke 9, 10, 11, 12 der Mehrgelenkanordnung auf einer Linie liegen. Ohne die zusätzliche Abstützung 25 könnte aus dieser Stellung heraus das vordere Dachteil 7 entweder in Richtung des Pfeils 26 nach unten kippen und dabei den Mittelteil 5 um die Gelenke 11, 12 in Richtung der Pfeile 27, 28 bewegen, oder das vordere Dachteil 7 könnte in Richtung des Pfeils 29 nach oben bewegbar sein und dabei den Mittelteil 5 um die Gelenke 11, 12 in Richtung der Pfeile 30, 31 bewegen. Die Abstützung 25 erfüllt dabei für das vordere Dachteil 7 eine doppelte Haltefunktion: sowohl entgegen der Abwärtsrichtung des Pfeils 26 als auch entgegen der Aufwärtsrichtung des Pfeils 29. Im Ausführungsbeispiel ist daher die Abstützung 25 als starrer Lenker ausgebildet. Auch ein Zug-Druck-Bowdenzug käme beispielsweise in Betracht.

Alternativ wäre es möglich, etwa einen Seilzug mit einer Unlenkung vorzusehen, der das Abkippen des vorderen Dachteils 7 durch sein Eigengewicht verhindert. Die Stützwirkung entgegen dem Pfeil 29 ist dabei insofern weniger wichtig, als schon die Gewichtskraft des Dachteils 7 dieser Bewegung entgegenwirkt.

Der Lenker 25 kann in seinem oberen Gelenk 32 am Dachteil 7 oder in seinem unteren Gelenk 33 an der Karosserie 20 etwa mit Spiel gehalten sein, da er im Unterschied zu einer Führungsstange für die Schwenkbewegung des Daches 2 nicht (mit)führend sein muß, sondern lediglich eine Abstützfunktion in der besagten Totpunktstellung haben muß. So kann beispielsweise das obere Gelenk 32 für den Lenker 25 am Dachteil 7 in einer Langlochkulisse verschieblich sein. Ebenso kann auch in dem Lenker 25 selbst ein elastisches Spiel vorhanden sein.

In Fig. 7 ist in der Totpunktlage ein Viergelenk von den Gelenken 9, 10 der Hauptsäulen 4 einerseits und den Gelenken 32, 33 der Abstützung 25 andererseits gebildet.

Bei einer toleranzarmen Montage der Abstützung 25 kann diese auch zumindest phasenweise in der weiteren Dachöffnungs- oder -schließbewegung als Teil einer Mehrgelenkanordnung oder eines Schwenkparallelogramms dienen. So kann beispielsweise auch in Fig. 8 eine Wirklinie der Mehrgelenkanordnung zwischen den Gelenken 9, 10 der Hauptsäule 4 und eine weitere Wirklinie zwischen den Gelenken 32 und 33 der Abstützung 25 liegen. Ebenso kann auch die erste Wirklinie zwischen den Gelenken 9, 10 der Hauptsäule 4 und eine weitere Wirklinie zwischen den Gelenken 11, 12 des Mittelteils 5 liegen.

Die Wirksamkeit der Abstützung 25 kann daher während der Bewegung variieren und ist lediglich in der Totpunktlage (Fig. 7), in der das Schwenkparallelogramm aus den Gelenken 9, 10, 11, 12 durchgeschwenkt wird und daher alle Achsen dieser Gelenke parallel in einer gemeinsamen Ebene liegen, zwingend vorgegeben. Während der gesamten sonstigen Bewegung und Endstellung des Daches 2 kann die Abstützung 25 daher entbehrlich sein, da die zwei weiteren Gelenke 32, 33 für eine Überbestimmung des Getriebes für die Dachbewegung sorgen.

Ein weiterer Vorteil der erfindungsgemäßen Kinematik zeigt sich darin, daß sowohl bei geschlossenem Dach (Fig. 5) als auch bei vollständig geöffnetem Dach (Fig. 9) das Schwenkparallelogramm mit den Achsen der Gelenke 9, 10, 11, 12 als Eckpunkte weit geöffnet ist, wodurch die Kraft zum Bewegen des Daches aus diesen Endlagen, insbesondere aus der geöffneten Stellung, minimiert ist und sich günstige Hebelarme zum Angreifen des Antriebsorgans 24 ergeben.

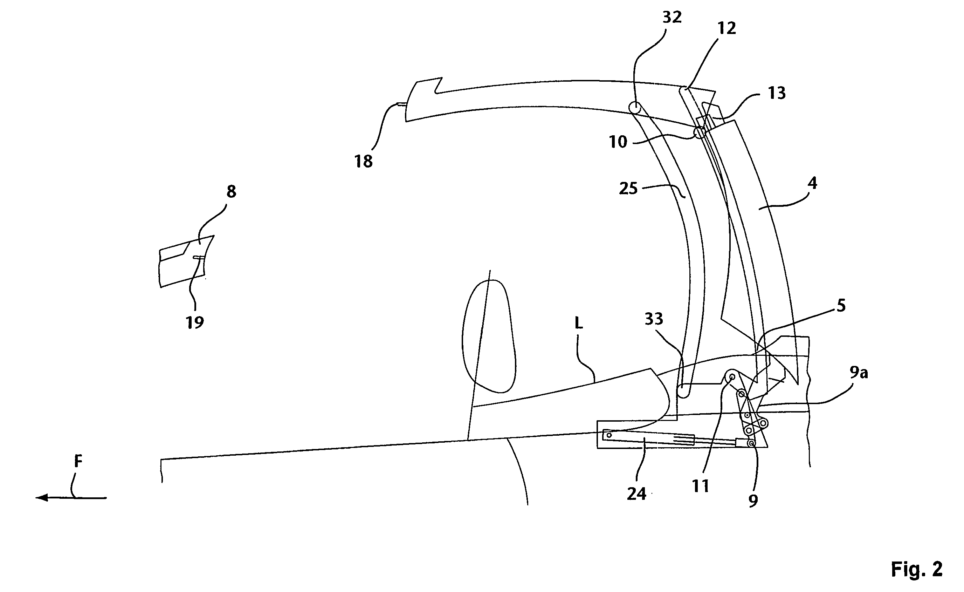

Als mögliche, jedoch nicht zwingende Option kann das vordere Dachteil 7 zusätzlich einen verschiebbaren Plattenkörper 13 umfassen, der nach Art eines Schiebedachs zu öffnen und hierbei über den rückwärtigen Dachteil 3 zu verlagern ist (in Fig. 1 in geschlossener Stellung dargestellt, in Fig. 2 und weiteren Figuren in geöffneter, über die Heckscheibe 8 parallel verlagerter und zumindest teilweise von den seitlichen Hauptsäulen 4 verdeckter Stellung gezeichnet). Der Plattenkörper 13 ist aus einem transparenten Kunststoff oder Glas gebildet, so daß er auch bei Verlagerung über die Heckscheibe 6 die Sicht nach hinten nicht gefährdet. Er weist seitliche Ausleger auf, die über Achsstummel oder dergleichen Führungselemente in seitlichen Führungsbahnen des oberen Dachteils 7 eingreifen. Des weiteren sind am Mittelteil 5 des hinteren Dachteils 3 Führungsschienen vorgesehen, die den Plattenkörper 13 in eine Parallellage zur Heckscheibe 6 führen und dort halten können. In geschlossener Stellung greift der Plattenkörper 13 sowohl über die im vorderen Bereich angeordneten Ausleger in die Führungsbahnen als auch über weitere Ausleger (nicht eingezeichnet) in die hinteren Führungsschienen ein. Ein Öffnen des Daches 2 ist daher erst bei geöffnetem Schiebedach 13 möglich.

Auch in maximal nach hinten verlagerter Öffnungsstellung des als Schiebedachs wirkenden Plattenkörpers 13 ist dieser in den Führungsschienen des hinteren Dachteils 3 und über seine Ausleger auch noch in den Führungsbahnen des oberen Dachteils 7 gehalten. Der Endpunkt der Führungsbahnen liegt in der Schwenkachse des oberen Schwenkgelenks 12, mit dem das Mittelteil 5 an dem oberen Dachteil 7 angreift, wodurch das Dach 2 mit geöffnetem Schiebedach 13 geöffnet und geschlossen werden kann.

Alternativ wäre es auch möglich, daß der Plattenkörper 13 im geschlossenem Zustand nur an dem oberen Dachteil 7 gehalten ist und im geöffneten Zustand vollständig an den hinteren Dachteil 3 übergeben ist. Dann wäre eine Dachöffnung sowohl bei vollständig geöffnetem als auch bei vollständig geschlossenem Schiebedach 13 möglich.

Der Mittelbereich 5 kann durch einen Tragrahmen und ein darauf befestigtes transparentes Plattenteil, das als Heckscheibe 6 dient, gebildet sein. Dieses kann ggf. die Führungsschienen für das Schiebedach 13 tragen. Auch viele andere Konstruktionen - etwa auch mit einem Rahmen, in dessen Mitte die Heckscheibe gelegen ist, oder mit direkt an eine Heckscheibe angeschweißten Auslegern - sind möglich.

Zur Festlegung des vorderen Dachteils 7 am Windschutzscheibenrahmen 8 sind dem Dachteil 7 in etwa in dessen Erstreckungsebene gelegene und im geschlossenen Zustand in Fahrtrichtung F weisende Zapfen 18 zugeordnet, die in komplementäre Ausnehmungen 19 des Windschutzscheibenrahmens 8 eingreifen können. Die Zapfen 18 können ebenso wie die Ausnehmungen 19 konisch ausgebildet sein, um dadurch eine Zentrierung des schließenden Daches 2 zu erleichtern. Eine zusätzliche Sicherung ist bei Vorsehen einer Sicherung des im nächsten Absatz erläuterten verschiebbaren Hauptlagers nicht zwingend erforderlich.

Die karosseriefesten Schwenklager 9, 11 für die Teile 4, 5 sind in der oben erwähnten optionalen Ausbildung insgesamt in einem gegenüber der Karosserie 20 horizontal oder nahezu horizontal in Fahrzeuglängsrichtung verschieblichen seitlichen Hauptlager angeordnet. Jedem dieser Hauptlager 21 ist ein Antrieb zugeordnet, etwa ein Hydraulikzylinder, eine Spindel, ein Elektromotor oder ähnliches. Über diesen ist das jeweilige Hauptlager - und damit das an diesem gehaltene Dach 2 - horizontal beweglich zwischen einer vorderen Extremalstellung bei vollständig geschlossenem Dach und einer hinteren Extremalstellung, in der das Dach 2 so weit entgegen der Fahrtrichtung verlagert ist, daß die Zapfen 18 außer Eingriff mit den Ausnehmungen 19 des Windschutzscheibenrahmens 8 gelangt sind. In dieser Stellung ist das Dach 2 frei um die Lager 9, 11 des Hauptlagers schwenkbar, ohne daß Kollisionsgefahr der Dachspitze mit dem Windschutzscheibenrahmen 8 bestünde.

Der Weg zwischen der vorderen und hinteren Extremalstellung des Antriebs 22 ist dabei über einen eventuell einstellbaren hinteren Anschlag derart auf wenige Zentimeter begrenzt, daß in der hinteren Extremalstellung des Daches 2 die Zapfen 18 gerade so weit außer Eingriff mit dem Windschutzscheibenrahmen 8 gelangt sind, daß das Schwenken stattfinden kann. Ein zu weites rückwärtiges Verlagern würde hingegen den Öffnungs-oder Schließvorgang unnötig verzögern.

Es genügt für die Schwenkbewegung des Daches 2 ein Antrieb 24 pro Fahrzeugseite, um eine gleichmäßige Schwenkbewegung um die Lager 9 und 11 zu bewirken.

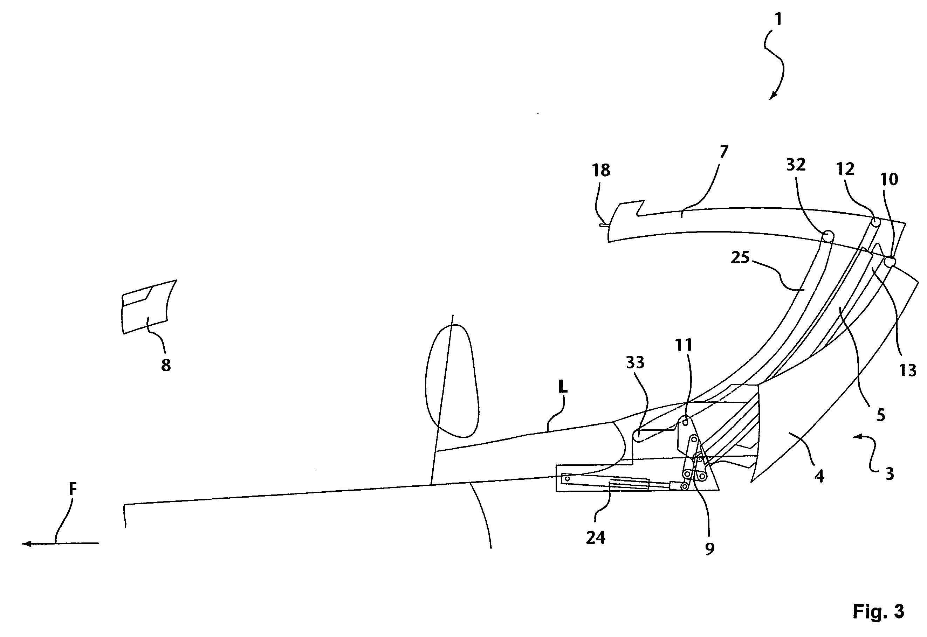

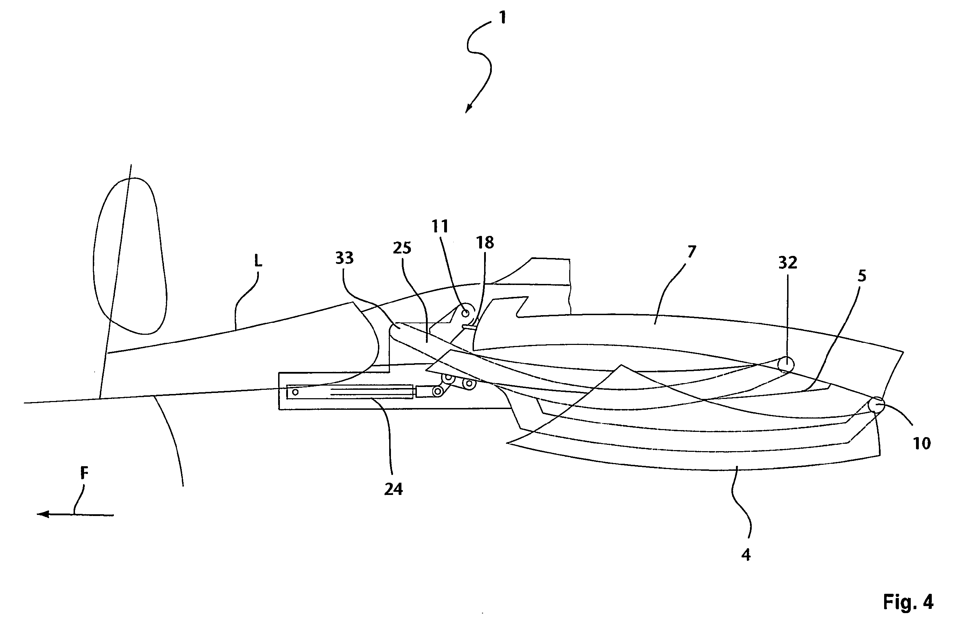

Zur Öffnung des Daches 2 aus der geschlossenen Stellung (Fig. 1) in eine vollständig geöffnete Stellung (Fig. 4) werden - ohne die Option des insgesamt verschieblichen Daches 2 - zunächst durch Kraft des Antriebs 24 die Ausleger 9a um die jeweiligen karosseriefesten Lager 9 heckwärts verschwenkt (Fig. 2, Fig. 3). Im hier gezeigten Beispiel wird vor Dachöffnung zunächst das Schiebedach 13 über Führung der Ausleger in den Führungsbahnen und Weiterführung des Plattenkörpers 13 in den Führungsschienen des hinteren Dachteils 3 derart geöffnet, daß in seiner vollständig geöffneten Stellung die Achsstummel koaxial mit der Schwenkachse des Schwenkgelenks 12 liegen. Dabei sind die Achsstummel weiter in den Führungsbahnen gehalten, sie müssen somit beim Aufschieben des Schiebedachs 13 weder eine Stufe noch einen Versatz überwinden. Da der Mittelbereich 5 und das Dachteil 7 am Gelenk 12 gegeneinander einschwenken, kann während dieses Einschwenkens der Plattenkörper 13 unbewegt parallel zu der dem Mittelbereich 5 zugehörigen Heckscheibe 6 gehalten sein und dennoch mit den Auslegern in den Führungsbahnen des vorderen Dachteils 7 verbleiben.

Während des Aufschwenkens der Dachteile 3 und 7 durchläuft aufgrund des Höhenversatzes der Ebenen der Gelenke 9 und 10 einerseits und 11 und 12 andererseits der Mittelbereich 5 die Erstreckungsebene der Hauptsäulen 4. Die Langseiten des Gelenkparallelogramms, gebildet aus den Hauptsäulen 4 und dem Mittelbereich 5, falten gegeneinander durch, so daß am Ende die Parallelogrammorientierung gewechselt hat. Dadurch gelangt der Mittelbereich 5 in eine oberhalb der Hauptsäulen 4 liegende Ablagestellung in der Karosserie 20 (Fig. 4, Fig. 9). Dies ist sehr vorteilhaft, weil dadurch unter dem Mittelbereich 5 mit der Heckscheibe 6 zusätzlicher Stauraum entsteht.

Mit der Option einer Horizontalverlagerung des gesamten Daches 2 würde zunächst dieses vor Einleitung der Aufschwenkbewegung nach hinten verschoben und nach vollständiger Dachöffnung wieder nach vorne verschoben werden können.

Die Erfindung ist sowohl bei Fahrzeugen mit manuell zu bewegenden Dächern auch bei voll- oder teilautomatischer Beweglichkeit des Daches 2 anwendbar.

## Patentansprüche

1. Cabriolet-Fahrzeug (1) mit einem zumindest zwei starre Dachteile (3;7) umfassenden beweglichen Dach (2), wobei sich ein hinterer Dachteil (3) zumindest zwischen einer Fensterbrüstungslinie (L) und einem in Fahrtrichtung (F) vorgeordneten und oberhalb eines Insassenraums liegenden Dachteil (7) erstreckt und einen im geschlossenen Dachzustand zwischen seitlichen Hauptsäulen (4) liegenden, eine Heckscheibe (6) umfassenden Mittelbereich (5) aufweist,
**dadurch gekennzeichnet,**
**daß** die Hauptsäulen (4) einerseits und der Mittelbereich (5) andererseits jeweils für sich sowohl mit der Fahrzeugkarosserie (20) als auch mit dem oberen Dachteil (7) schwenkbeweglich über Gelenke (9,10;11,12) verbunden sind, die in Seitenansicht eine Mehrgelenkanordnung bilden und deren Drehachsen in zumindest einer Bewegungsstellung des Daches (2) in einer gemeinsamen Ebene (E) liegen, wobei zumindest eine zusätzliche Abstützung (25) des oder eines vor dem hinteren Dachteil (3) liegenden Dachteils (7) gegenüber der Karosserie (20) vorgesehen ist, die in zumindest dieser Bewegungsstellung wirksam ist.

2. Cabriolet-Fahrzeug (1) nach Anspruch 1
**dadurch gekennzeichnet,**
**daß** die Mehrgelenkanordnung (9,10;11,12) ein Viergelenk bildet.

3. Cabriolet-Fahrzeug (1) nach einem der Ansprüche 1 oder 2,
**dadurch gekennzeichnet,**
**daß** die Hauptsäulen (4) einerseits und der Mittelbereich (5) andererseits Teile eines Schwenkparallelogramms bildet.

4. Cabriolet-Fahrzeug (1) nach einem der Ansprüche 1 bis 3,
**dadurch gekennzeichnet,**
**daß** während eines Teils der Dachöffnungs-oder -schließbewegung die Hauptsäulen (4) einerseits und der Mittelbereich (5) andererseits eine Mehrgelenkkette (9, 10; 11, 12) und während eines Teils der Bewegung die Haptsäulen (4) und die zusätzliche Abstützung (25) eine Mehrgelenkkette (9,10;32,33) bilden.

5. Cabriolet-Fahrzeug (1) nach Anspruch 4,
**dadurch gekennzeichnet,**
**daß** während eines Teils der Dachöffnungs-oder -schließbewegung die Hauptsäulen (4) einerseits und der Mittelbereich (5) andererseits ein Schwenkparallelogramm und während eines Teils der Bewegung die Haptsäulen (4) und die zusätzliche Abstützung (25) ein Schwenkparallelogramm bilden.

6. Cabriolet-Fahrzeug nach einem der Ansprüche 1 bis 5,
**dadurch gekennzeichnet,**
**daß** die zusätzliche Abstützung (25) ein oder das vordere Dachteil (7) gegenüber der Fahrzeugkarosserie (20) abstützt.

7. Cabriolet-Fahrzeug nach einem der Ansprüche 1 bis 6,
**dadurch gekennzeichnet,**
**daß** pro Fahrzeugseite genau eine zusätzliche Abstützung (25) angeordnet ist.

8. Cabriolet-Fahrzeug nach einem der Ansprüche 1 bis 5,
**dadurch gekennzeichnet,**
**daß** die oder jede Abstützung (25) als in sich oder in zumindest einer ihrer Anbindungen (32;33) elastischer Lenker ausgebildet ist.

9. Cabriolet-Fahrzeug nach einem der Ansprüche 1 bis 8,
**dadurch gekennzeichnet,**
**daß** die Anlenkung (11) des Mittelbereichs (5) an der Karosserie (20) und die Anlenkung (12) des Mittelbereichs (5) an dem oberen Dachteil (7) jeweils oberhalb der Ebenen der jeweiligen Anlenkung (9;10) der Hauptsäule (4) gelegen sind.

10. Cabriolet-Fahrzeug nach Anspruch 9,
**dadurch gekennzeichnet,**
**daß** im geöffneten Zustand die Heckscheibe (6) oberhalb der Hauptsäulen (4) gehalten ist.

11. Cabriolet-Fahrzeug nach einem der Ansprüche 1 bis 10,
**dadurch gekennzeichnet,**
**daß** der Mittelbereich (5) im wesentlichen über seine ganze Höhe als Heckscheibe (6) ausgebildet ist.

12. Cabriolet-Fahrzeug nach einem der Ansprüche 1 bis 11,
**dadurch gekennzeichnet,**
**daß** dem oberen Dachteil (7) ein Plattenkörper (13) zugeordnet ist, der in seitlichen Führungen längsverschieblich gehalten ist.

13. Bewegliches Fahrzeugdach (2), das zumindest zwei starre Dachteile (3;7) umfaßt, wobei sich ein hinterer Dachteil (3) in Einbaustellung an einem Cabriolet-Fahrzeug (1) nach einem der Ansprüche 1 bis 12 zumindest zwischen einer Fensterbrüstungslinie (L) und einem in Fahrtrichtung (F) vorgeordneten und oberhalb eines Insassenraums liegenden Dachteil (7) erstreckt und einen im geschlossenen Dachzustand zwischen seitlichen Hauptsäulen (4) liegenden, eine Heckscheibe (6) umfassenden Mittelbereich (5) aufweist, **dadurch gekennzeichnet,**
**daß** die Hauptsäulen (4) einerseits und der Mittelbereich (5) andererseits in Einbaustellung jeweils für sich sowohl mit der Fahrzeugkarosserie (20) als auch mit dem oberen Dachteil (7) schwenkbeweglich über Gelenke (9,10;11,12) verbindbar sind, die in Seitenansicht eine Mehrgelenkanordnung bilden und deren Drehachsen in zumindest einer Bewegungsstellung des Daches (2) in einer gemeinsamen Ebene (E) liegen, wobei zumindest eine zusätzliche Abstützung (25) des oder eines vor dem hinteren Dachteil (3) liegenden Dachteils (7) gegenüber der Karosserie (20) vorgesehen ist.

## Claims

1. A convertible vehicle (1) with a movable roof (2) comprising at least two rigid roof parts (3; 7), wherein a rear roof part (3) extends at least between a window-sill line (L) and a roof part (7), which is located in front when viewed in the direction of travel (F) and above a passenger compartment, and said rear roof part (3) comprises a central region (5), located between lateral main pillars (4) when the roof is closed and comprising a rear window (6),
**characterised in that**
the main pillars (4) on the one hand and the central region (5) on the other hand are each independently articulated to the vehicle body (20) and to the upper roof part (7) via articulations (9, 10; 11, 12), which form a multi-bar linkage when viewed laterally and whose axes of rotation are located in a common plane (E) in at least one movement position of the roof (2), wherein at least one additional support (25) is provided to support the or a roof part (7), located in front of the rear roof part (3), with respect to the body (20) and being effective in at least said movement position.

2. The convertible vehicle (1) according to claim 1, **characterised in that** the multi-bar linkage (9,10; 11, 12) forms a four-bar linkage.

3. The convertible vehicle (1) according to any one of claims 1 or 2, **characterised in that** the main pillars (4) on the one hand and the central region (5) on the other hand form parts of a pivoting parallelogram.

4. The convertible vehicle (1) according to any one of claims 1 to 3, **characterised in that**, during part of the roof opening or closing movement, the main pillars (4) on the one hand and the central region (5) on the other hand form a multi-link chain (9, 10; 11, 12), and during part of the movement the main pillars (4) and the additional support (25) form a multi-link chain (9, 10; 32, 33).

5. The convertible vehicle (1) according to claim 4, **characterised in that**, during part of the roof opening or closing movement, the main pillars (4) on the one hand and the central region (5) on the other hand form a pivoting parallelogram, and during part of the movement the main pillars (4) and the additional support (25) form a pivoting parallelogram.

6. The convertible vehicle according to any one of claims 1 to 5, **characterised in that** the additional support (25) supports a/the front roof part (7) with respect to the vehicle body (20).

7. The convertible vehicle according to any one of claims 1 to 6, **characterised in that** exactly one additional support (25) is arranged on each vehicle side.

8. The convertible vehicle according to any one of claims 1 to 5, **characterised in that** the or each support (25) is provided as a connecting rod which is elastic in itself or in at least one of its linkages (32; 33).

9. The convertible vehicle according to any one of claims 1 to 8, **characterised in that** the articulation (11) of the central region (5) to the vehicle body (20) and the articulation (12) of the central region (5) to the upper roof part (7) are each located above the planes of the respective articulations (9; 10) of the main pillar (4).

10. The convertible vehicle according to claim 9, **characterised in that** the rear window (6) is held above the main pillars (4) in its opened state.

11. The convertible vehicle according to any one of claims 1 to 10, **characterised in that** the central region (5) is provided substantially over its entire height as a rear window (6).

12. The convertible vehicle according to any one of claims 1 to 11, **characterised in that** a plate body (13), held longitudinally displaceable in lateral guides, is assigned to the upper roof part (7).

13. A movable vehicle roof (2), comprising at least two rigid roof parts (3; 7), wherein a rear roof part (3), in its position installed on a convertible vehicle (1) according to any one of claims 1 to 12, extends at least between a window-sill line (L) and a roof part (7), which is located in front when viewed in the direction of travel (F) and above a passenger compartment, and said rear roof part (3) comprises a central region (5), located between lateral main pillars (4) when the roof is closed and comprising a rear window (6),
**characterised in that**
the main pillars (4) on the one hand and the central region (5) on the other hand are each independently articulated, in their installed positions, to the vehicle body (20) and to the upper roof part (7) via articulations (9, 10; 11, 12), which form a multi-bar linkage when viewed laterally and whose axes of rotation are located in a common plane (E) in at least one movement position of the roof (2), wherein at least one additional support (25) is provided to support the or a roof part (7), located in front of the rear roof part (3), with respect to the body (20).

## Revendications

1. Véhicule cabriolet (1) avec un toit déplaçable (2) comprenant au moins deux éléments de toit rigides (3; 7), dont un élément de toit arrière (3) s'étend au moins entre une ligne de parapet de fenêtre (L) et un élément de toit (7) disposé en avant dans la direction de marche et au-dessus d'un habitacle et ledit élément (3) comprend une région centrale (5) disposée entre des montants principaux latéraux (4) lorsque le toit est fermé et comprenant une lunette arrière (6), **caractérisé en ce que**
les montants principaux (4) d'une part et la région centrale (5) d'autre part sont tous articulés indépendamment à la carrosserie (20) et à l'élément de toit supérieur (7) au moyen d'articulations (9, 10; 11, 12), qui constituent un ensemble à plusieurs articulations en vue latérale et dont les axes de rotation sont disposés dans un plan commun (E) en au moins une position de déplacement du toit (2), au moins un support additionnel (25) étant prévu pour supporter le ou un élément de toit (7), disposé avant l'élément de toit arrière (3), par rapport à la carrosserie (20) et étant effectif au moins dans ladite position de déplacement.

2. Véhicule cabriolet (1) selon la revendication 1, **caractérisé en ce que** l'ensemble à plusieurs articulations (9,10; 11, 12) constitue un ensemble à quatre articulations.

3. Véhicule cabriolet (1) selon l'une quelconque des revendications 1 ou 2, **caractérisé en ce que** les montants principaux (4) d'une part et la région centrale (5) d'autre part constituent des éléments d'un parallélogramme articulé.

4. Véhicule cabriolet (1) selon l'une quelconque des revendications 1 à 3, **caractérisé en ce que**, pendant une étape du mouvement d'ouverture ou de fermeture du toit, les montants principaux (4) d'une part et la région centrale (5) d'autre part constituent une chaîne articulée en plusieurs parties (9, 10; 11, 12), et pendant une étape du mouvement les montants principaux (4) et le support additionnel (25) constituent une chaîne articulée en plusieurs parties (9, 10; 32, 33).

5. Véhicule cabriolet (1) selon la revendication 4, **caractérisé en ce que**, pendant une étape du mouvement d'ouverture ou de fermeture du toit, les montants principaux (4) d'une part et la région centrale (5) d'autre part constituent un parallélogramme articulé, et pendant une étape du mouvement les montants principaux (4) et le support additionnel (25) constituent un parallélogramme articulé.

6. Véhicule cabriolet selon l'une quelconque des revendications 1 à 5, **caractérisé en ce que** le support additionnel (25) support un/l'élément de toit avant (7) par rapport à la carrosserie (20).

7. Véhicule cabriolet selon l'une quelconque des revendications 1 à 6, **caractérisé en ce qu'**il y a exactement un support additionnel (25) par côté du véhicule.

8. Véhicule cabriolet selon l'une quelconque des revendications 1 à 5, **caractérisé en ce que** l'on prévoit le ou chaque support additionnel (25) sous forme d'un guidon qui est élastique en soi ou dans au moins une de ses liaisons (32; 33).

9. Véhicule cabriolet selon l'une quelconque des revendications 1 à 8, **caractérisé en ce que** l'articulation (11) de la région centrale (5) à la carrosserie (20) et l'articulation (12) de la région centrale (5) à l'élément de toit supérieur (7) sont respectivement situées au-dessus des plans des articulations (9; 10) respectives du montant principal (4).

10. Véhicule cabriolet selon la revendication 9, **caractérisé en ce que** la lunette arrière (6) est maintenue au-dessus des montants principaux (4) dans l'état ouvert.

11. Véhicule cabriolet selon l'une quelconque des revendications 1 à 10, **caractérisé en ce que** la région centrale (5) constitue, sensiblement sur toute sa hauteur, une lunette arrière (6).

12. Véhicule cabriolet selon l'une quelconque des revendications 1 à 11, **caractérisé en ce qu'**un corps de plaque (13), maintenu déplaçable longitudinalement dans des guides latéraux, est associé à l'élément de toit supérieur (7).

13. Toit de véhicule déplaçable (2), comprenant au moins deux éléments de toit rigides (3; 7), dont un élément de toit arrière (3) s'étend, dans sa position d'installation sur un véhicule cabriolet (1) selon l'une quelconque des revendications 1 à 12, au moins entre une ligne de parapet de fenêtre (L) et un élément de toit (7) disposé en avant dans la direction de marche et au-dessus d'un habitacle et ledit élément (3) comprend une région centrale (5) disposée entre des montants principaux latéraux (4) lorsque le toit est fermé et comprenant une lunette arrière (6), **caractérisé en ce que**
les montants principaux (4) d'une part et la région centrale (5) d'autre part sont tous articulés indépendamment, dans leurs positions d'installation, à la carrosserie (20) et à l'élément de toit supérieur (7) au moyen d'articulations (9, 10; 11, 12), qui constituent un ensemble à plusieurs articulations en vue latérale et dont les axes de rotation sont disposés dans un plan commun (E) en au moins une position de déplacement du toit (2), au moins un support additionnel (25) étant prévu pour supporter le ou un élément de toit (7), disposé avant l'élément de toit arrière (3), par rapport à la carrosserie (20).
